# EUROPEAN PATENT SPECIFICATION

(11) **EP 1 726 214 B1**
(45) Date of publication and mention of the grant of the patent: **20.07.2011**
(21) Application number: 06113726.1
(22) Date of filing: 09.05.2006
(51) Int. Cl.: A23K 1/00, A23K 1/02, F26B 5/04, A23K 3/00, B01D 1/30

(54) **Manufacture of animal feed supplements and its associated apparatus**
Verfahren zur Herstellung der Ergänzungsfuttermittel und Apparatus
Procédé de fabrication des suppléments de fourrage et l'appareil correspondant

(30) Priority: 25.05.2005 GB 0510629
(43) Date of publication of application: 29.11.2006
(73) Proprietor: Carrs Agriculture Limited, Wigton, Cumbria, CA7 4AJ (GB)
(72) Inventor: Atherton, Edward, Wigton, Cumbria CA7 8NH (GB); Lister, Clifford James, Wigton, Cumbria CA7 0JQ (GB)
(74) Representative: Gover, Richard Paul

(56) References cited:
- EP-A- 0 509 748
- WO-A-2005/007863
- AU-B2- 613 880
- GB-A- 1 315 174
- US-A- 3 880 668
- US-A- 3 961 081
- US-A- 4 737 377
- US-A- 4 846 053
- US-A- 6 143 335
- US-B1- 6 440 478

## Description

The present invention relates to the manufacture of animal feed supplements, and in particular to a method and apparatus for processing sugar-based foodstuffs, such as molasses, into animal feed supplements.

Molasses is widely used as a basis for animal feed supplements. The manufacture of molasses based animal feed supplements involves heating raw molasses to reduce the water content and to crystallise the sugars within the molasses. If the molasses is heated to the correct temperature for the correct period of time and subsequently cooled at the correct rate, a hard glass like crystalline block is formed upon cooling. If additives (e.g. vitamins, minerals or pharmaceuticals) are added and mixed with the heated molasses before solidification occurs, the glassy block of molasses, when cooled, serves as a carrier for the additives whilst also serving to regulate their dispensation. When an animal licks the block, its saliva dissolves the carrier to enable some of the additives to be consumed. Although pleasant, the animal eventually tires of licking, thereby regulating the amount of additive ingested. Furthermore, because liquid (e.g. saliva or rainwater) can only penetrate a short distance into the surface of the glass like block, dissolution of the block is rate limited and hence predictable over time.

For these reasons, animal feed supplements based on composite foodstuffs are extremely convenient to use and are becoming increasingly popular amongst farmers for administering regulated quantities of additives, such as nutraceuticals, vitamins, minerals or proteins, to livestock over a period of time.

A known method of processing molasses to produce an animal feed supplement as described above is to blend the molasses with a vegetable oil and to heat the mixture in a vat. Heating takes place causing water to be removed by evaporation whilst simultaneously inducing chemical changes in sugar chemistry (e.g. sugar cracking) to cause the mixture to become hard and glass like upon cooling. After heating to the desired temperature, the mixture is transferrer to a vacuum vessel where drying and cooling takes place under vacuum conditions (i.e. at a pressure lower than atmospheric pressure) to ensure that as much water as possible is removed from the mixture. When the temperature of the molasses has fallen to a value at which the additives will not be damaged, the desired additives are blended with the mixture to create a desired feed supplement composition. The warm mixture, which has a dough like consistency, is then dispensed into containers, whereupon it is allowed to cool and solidify into the glass like blocks as described previously.

US 6440478 describes a feed block produced by a process in which a fluid mixture comprising molasses, additives and other nutrients is produced into a dehydration vessel operating under a partial vacuum. The fluid mixture is heated to a temperature less than about 130°F and agitated within the dehydration vessel to drive water from the fluid mixture. The water vapour is cooled, condensed and removed from the dehydration vessel to a condensate collector where the amount of water removed can be measured to determine the degree of dehydration. Once an appropriate amount of water has been removed, the dehydrated fluid mixture is produced from the dehydration vessel, formed into block shapes and cooled to form feed blocks. The resulting feed blocks are high in nutritional value because the low temperature dehydration process prevents the nutrients from being thermally destroyed.

US 6143335 describes solid, edible nutritional food such as a bar or cube for supplementing the diets of both humans and animals. Broadly, the foods comprise bars which include a sugar-based sweetening ingredient, a quantity of fat, and a formulate quantity of various vitamins, minerals, medicaments, and/or other supplemental ingredients. The bars can be formulated to provide 100% of the daily requirements of the supplemental ingredients, or alternately can be formulated to provide extra amounts of a particular component which is lacking in the animal or human's diet. In one embodiment, the bars weigh approximately 11b. and are scored into bite-sized pieces for easy consumption, thus providing a method for delivering exact quantities of supplemental ingredients to animals or humans.

US 3961081 describes a high energy feed supplement for animals in the form of a block that is dense, non-porous, hard, and vitreous in nature, the block embodying molasses solids as a primary structural and nutritional constituent, and in general providing the ingredients and advantages of a liquid feed supplement in solid form. A liquid body of the molasses feed composition is heated at substantially ambient pressure in a temperature range substantially in excess of the boiling point of water but not so hot as to damage the molasses solids or other heat-vulnerable ingredients such as vitamins, so as to remove a major portion of the water content of the composition without foaming therein, and then the composition is subjected to a vacuum without further temperature increase, and preferably while being allowed to cool so as to further reduce the water content without foaming and thereby conditioning the solids in the molasses so that the composition when subsequently poured into moulds quickly solidifies into dense, non-porous, hard, vitreous blocks.

US 3880668 discloses an apparatus for the continuous, large scale production of a dried molasses food product. Liquid molasses is continuously deposited in a thin film on a stationary heated surface. The material is then agitated while being subjected to controlled elevated temperatures so as to drive off a portion of the water contained therein. The concentrated molasses thus formed is then continuously metered into a vacuum column wherein it undergoes rapid dehydration. Finally, the material is removed from the vacuum column, deposited in a thin stream or ribbon on a cooling surface and, upon reaching a stable solid state, is crushed and packaged.

US 4737377, AU 613880 and US 4846053 describe a method of, and apparatus for making hard, dense, vitreous molasses-based animal feed supplement masses, the method comprising heating a molasses composition to a temperature within the range of about 240°F to about 285°F to remove all of the water content of the molasses that is necessary to form the desired vitreous masses. A portion of the heating process may be accompanied by an injection of ambient air into the molasses composition being heated. Immediately after heating, the molasses composition is cooled, agitated and de-aerated by directing the molasses composition through a cooler and de-aerator including a conduit in which is positioned an offset beater shaft assembly adapted to separate portions of the composition from the remainder thereof while directing cooling air through the conduit about said portions. After cooling, other animal feed supplements may be mixed with the molasses composition by a utilization of a variable pitch ribbon mixer-auger, further cooled, containerized, and allowed to cure into hard, dense, vitreous masses.

GB 1315174 describes a method of making a vitreous animal lick comprises heating a material comprising 50-100% by wt. molasses, at 221-321 F for 3-12 minutes, drawing a vacuum of at least 24" Hg on the material, breaking the vacuum, introducing the hot material into moulding means and allowing the material to cool until it hardens into a block. The block may comprise cane, beet or citrus molasses, tallow, acidulated soap stock, a residue of cottonseed, com or soy oil, hydrogenated oils of animal and vegetable origin, salt, urea, calcium phosphate, ammonium phosphate, fishmeal, bone meal, meat meal, kaolin, bentonite, chopped or ground grain, alfalfa, coconut, soya, cottonseed, sesame or linseed, wheat or rice bran, trace elements such as manganese, iodine, zinc, copper, cobalt and iron, e.g. in the form of a chloride or sulphate, antioxidant such as BHA and BHT, anthelmintic, antibiotic, phenothiazine, growth stimulant and bloat preventive.

Problems with the known methods of processing include:
- The large amount of fuel required to heat the mixture.
- The lead-time of the process, which is rate-limited by the rate of evaporation of liquids.
- The fact that the vapours extracted during the drying phase contain volatile materials and have an unpleasant odour, which environmental legislation requires to be removed using expensive and energy-inefficient methods before the vapours can be vented to atmosphere.
- Temperature sensitive additives can only be added at lower temperature stages of the process, which adds to machine complexity and control problems.
- The vigorous nature of the heating process and high temperatures cause loss of particulate matter in the air stream, and the chemical changes in the complex sugar profile causes sugar loss of about two to eight percent.

It is an object of the invention to overcome one or more of the above problems.

According to a first aspect of the invention there is provided a method of manufacturing an animal feed supplement comprising feeding a carbohydrate-containing fluid composition into a first vessel, heating the composition and cooling the composition and allowing the composition to harden, characterised by heating the composition to a temperature to cause sugar cracking to take place therein and simultaneously at least partially evacuating the vessel.

Preferably, the fluid composition comprises molasses.

The heating step involves raising the temperature of the composition to above a point where sugar cracking takes place therein. Preferably, the fluid composition is heated to between 90°C and 125°C. and the first vessel is evacuated to a pressure that reads between 1 000mbar and 100mbar on a vacuum pressure gauge.

The use of a vacuum in the processing of heated molasses is contraindicated in the prior art, largely because a reaction can occur at elevated temperatures, which can cause the composition to suddenly boil-over or foam, which can cause the heating vessel to become unstable and potentially dangerous (e.g. be damaged or explode).

Advantageously, the invention may allow the composition to be cooked at lower temperatures and with less vigorous reactions.

The vacuum is preferably applied using a vacuum system. The vacuum system, where provided, may comprise a vacuum pump, which is ideally a liquid ring vacuum pump, a shell and tube heat exchanger and water tank with separate cooling water flow for the pump, and a condenser with separate cooling water loop. Heating of the composition may be achieved using an oil heater or gas-powered heater to generate steam or to heat thermal fluid, which is preferably circulated through jacketed vessels. The method preferably involves evaporating a significant portion of the moisture resident in the composition and removing the resulting vapour from the vessel. The vapour, once removed, is preferably condensed using a condenser.

A second stage cooling step is preferably also provided during which heat and further excess moisture is extracted from the composition, which may cause the composition to achieve a desired viscosity. In a most preferred embodiment of the invention, the cooling step involves the rapid extraction of heat from the composition, e.g. by quickly transferring the composition into a second vessel maintained at a lower temperature, i.e. a cooler vessel.

The second vessel, where provided, may have means (e.g. a vacuum system) associated therewith for reducing the pressure therein during the cooling step.

The cooling step may additionally comprise a further evaporation step, again using a vacuum system, to evaporate a portion of the composition, e.g. the water portion.

Once the composition is preferably dispensed into a dump tank.

One or more additives are preferably blended into the composition at some point in the process. Blending may be achieved by any suitable means, although it is envisaged that a motor-driven screw blender would be used.

The composition may comprise molasses or a processed sugar-containing liquid foodstuff and the one or more additives may be of the group comprising a vitamin, a mineral, a protein, flavouring, a colourant, a preservative and a different composition.

Once processed, the composition is preferably dispensed into a container or containers. Dispensing may be accomplished using an extruder.

The composition may be agitated at any or all stages of the process. An agitator, in the form of an impeller driven by a motor may be provided for this purpose.

A second aspect of the invention provides an apparatus for manufacturing an animal feed supplement comprising a first vessel and means for feeding a carbohydrate-containing fluid composition into the first vessel, means for heating and cooling the fluid composition characterised by means for heating being adapted to heat the composition to above a temperature where sugar cracking takes place therein, means for applying a vacuum to the composition in the first vessel, and wherein the first vessel comprises a barometric seal that prevents the pressure within the vessel exceeding a predetermined threshold, the baromatic seal comprising an outlet conduit, through which the composition can be discharged when the pressure within the vessel exceeds the predetermined threshold.

Preferably, the invention provides an apparatus for manufacturing a molasses-based animal feed supplement in which the fluid composition comprises molasses.

Preferably, the means for heating is adapted to heat the fluid composition to a temperature between 90°C and 125 °C. for 30 - 150 minutes whilst maintaining a pressure within the vessel that is lower than atmospheric pressure. The pressure within the vessel can be anywhere between 1000mbar and 100mbar on a vaccum pressure gauge.

In practice, the vessel requires a pressure release system that prevents the pressure within the vessel exceeding a predetermined threshold. An increase in pressure may occur where the composition suddenly boils over due to chemical changes in the materials, as sometimes happens when sugars are heated. One possible pressure release system comprises a vessel overflow outlet conduit through which the composition can be discharged when the pressure within the vessel exceeds the predetermined threshold. The outlet conduit may comprise a barometric seal to maintain vacuum pressures.

Inlet valves and outlet valves may be provided for filling and/or emptying the vessel and conduits, and pipes or chutes may be provided for conveying the composition through the process.

The method and/or apparatus are ideally, although not essentially, computer-controlled. The computer, where provided may control the operation of any of the components of the process. Sensors may also be provided for monitoring the process and/or apparatus. Such sensors may include temperature sensors, weight sensors, strain gauges, pressure/vacuum sensors etc.

Envisaged advantages of the invention include:
- Reducing the boiling point proportionate to the level of vacuum created, which may allow the flexibility to either:
   o Heat to the desired temperature in a shorter time period (thus improving throughputs substantially and decreasing utility costs per tonne of product); or
   o Remove the same volume of moisture from the composition at lower temperatures (thus delivering a cost saving in terms of fuel consumption).
   o Prevent sugar loss of about two to eight percent by less vigorous vessel activity and chemical sugar conversion.
- Presenting an opportunity to include other high moisture raw materials into the formulations as an alternative, or in addition to molasses, which are not currently practicable to use in the atmospheric cooking process. (This is considered to be vital to the successful continuation of block manufacture into the future, as the quality and availability of molasses declines due to improved sugar refining techniques and the increasing use of molasses by other industries.)
- Reducing fuel consumption, which is likely to have a positive impact on carbon emissions.
- Whereas the prior art atmospheric cooking process produces saturated steam at up to 0.01 m³ s⁻¹, which contains significant volumes of odorous compounds, including hydrocarbons and metacarbons, (which under current legislation must not be emitted to atmosphere and require significant capital expenditure and further utility usage to ensure compliance), the vacuum cooking process removes this odour nuisance without substantial capital expenditure and without the running costs of associated equipment currently used, by condensing all the steam during the vacuum cooking process.

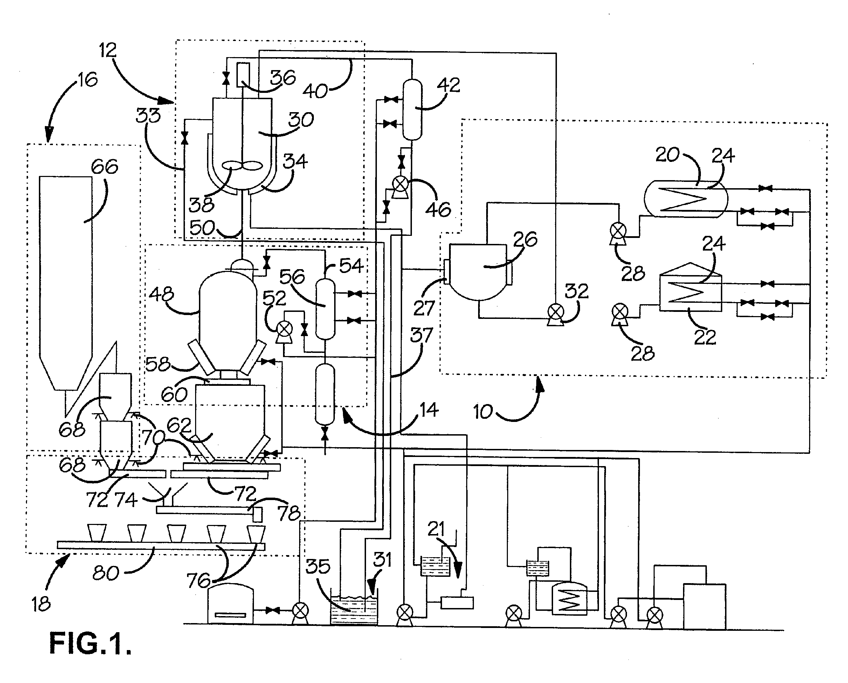

A preferred embodiment of the invention shall now be described, by way of example only, with reference to the accompanying drawing, Figure 1, which shows a schematic system diagram of an embodiment of the manufacture of animal feed supplements in accordance with the invention.

Referring to Fig. 1, in very general terms the illustrated arrangement is intended to feed raw molasses/carbohydrate-contianing liquid foodstuffs sequentially from a storage and premix stage 10 to a heating stage 12 where the liquid mixture is heated under vacuum conditions, a cooling and drying, stage 14 where the carrier material is cooled whilst vapours are removed, a blending stage 16 where additives are admixed and blended with the carrier material and a dispensing stage 18 where the final product (comprising a carrier and additives) is dispensed into containers and is then allowed to solidify, to produce a glass like block upon cooling to ambient temperatures.

The storage and premix stage 10 comprises one or more storage vessels 20, 22 in which raw materials, such as a sugar-based substance (e.g. molasses) and a vegetable oil (e.g. palm oil) are stored separately. The vessels 20, 22 are heated using pipes 24 through which hot water flows, in order to keep the materials in a flowable state. The raw materials are pumped by means of pumps 28 into a premix vessel 26. The premix comprises a fluid feed composition typically containing 40-100% molasses, depending upon their sugar content, with the balance being made µp of palm oil or other liquid foodstuffs.

A desired amount of the premixed material is then transferred from the premix vessel to a heating vessel 30 of the heating stage 12 by means of a pump 32. The heating vessel 30 is heated using a vessel jacket 34 that is fed with hot oil from a boiler 21. The batch of material within the heating vessel 12 is continuously stirred using an impeller 38 driven by an electric motor 36. Heating the material above boiling point within the heating vessel 30 causes water to be expelled therefrom in the form of steam, which is extracted from the heating vessel 30 via a steam exhaust pipe 40 and condensed back into water in a condenser 42.

A vacuum pump 46 of the fluid ring type communicates with the heating vessel 12 via the steam exhaust pipe 40, which serves primarily to reduce the pressure in the heating vessel 30 as well as acting as a backing pump for the condenser 42.

The heating stage involves heating the carrier material in a vessel to 90-125°C, for 30-150 minutes whilst maintaining a pressure in the vessel that is lower than atmospheric pressure. The pressure within the vessel can be anywhere between 1000mbar and 100mbar on a vacuum pressure gauge.

The material mix is continuously agitated during heating by means of the agitator 38.

A pressure release system 31 to minimise damage in the event that the mixture within the heating vessel 30 suddenly boils over is provided. The pressure release system comprises an outlet conduit 33, the upper end of which is connected to the sidewall of the heating vessel, above the normal level of mixture within the vessel, and the lower end of which is immersed in a bath of water 35, which creates a barometric seal. A second conduit 37 is also provided, its lower end also being immersed in the bath of water 35 and its upper end being connected to the condenser 42. If the depth to which the end of the conduits 33, 37 are immersed in the column of water is the head of water equivalent to the vacuum applied, the vacuum integrity of the vessel 30 is not broken or degraded. However, in the event of a rapid expansion of the composition, the pressure in the vessel 30 will be increased, thereby raising the pressure in the backing conduit 37, enabling excess composition to be vented down the outlet conduit 33.

The heating stage of the process is designed to drive off the major proportion of the water content in the composition whilst inducing chemical changes (e.g. cracking) in the sugars present in the premixed feed composition, which is critical to produce the glass like finished block.

After having been heated, the mixture is transferred from the heating vessel 12 via a transfer pipe 50 to a second vacuum vessel 48, which forms part of the cooling and drying stage 14. The second vacuum vessel 48 is also held under vacuum using a liquid ring vacuum pump 52, which serves to continue the removal of moisture from the carrier material. Water vapour is extracted from the second vacuum vessel 48 via a second steam exhaust pipe 54 before being condensed in a second condenser 56 (which is also connected to the vacuum pump 46).

Optionally, whilst in the second vacuum vessel 48, the mixture can be stirred using a motor-driven impeller (not shown).

The temperature of the carrier material in the second vacuum vessel 48 is regulated using a water jacket 58 which receives heated water to prevent the carrier material within from solidifying or becoming too viscous. Once the desired water content has been attained, a slide valve 60 is opened allowing the material to drop into a dump tank 62. The dump tank 62 is also warmed using a water jacket 64 to prevent the material from solidifying or becoming too viscous.

The cooling and drying stage 14 consists of reducing the pressure in the second vacuum vessel to below atmospheric pressure to further reduce the moisture content, for between 10 and 30 minutes whilst cooling the carrier material to ∼50-75°C. The pressure in the vessel can be anywhere between 170mbar and 35mbar on a vacuum pressure gauge.

The next stage 16 in the process involves blending additives into the treated material to form a composite composition. The blending stage comprises a silo 66 in which additives are stored. (One silo 66 is shown, although several may be provided, depending on the additives to be incorporated). The additives are mixed in mixing vessels 68 before being blended with the carrier material using screws disposed within each silo.

Advantageously, the process enables a high-temperature reaction to be initiated in the cooking vessel whilst not damaging the additives, which are added later on - at a lower temperature stage of the process.

The dump tank 62 and the mixing vessels 68 are continuously weighed using electronic load cells 70 so that the composition of the final composite composition can be continuously monitored analysed and/or corrected if needed.

Final blending takes place using a pair of intermeshing Archimedean screws 72. The blended composite composition is then fed into a hopper 74 before being dispensed into containers 76 using an extruder 78. The containers 76 pass stepwise beneath the extruder 78 on a conveyor belt 80 and the extruder is arranged to dispense a predetermined volume of product into each container as it rests temporarily beneath the extruder.

As previously stated, an advantage of heating the mixture under vacuum conditions is that the heating stage can be carried out at reduced temperature (or that less heat is required to achieve the same temperature). This means that the blending of heat-sensitive additives is now possible at the premix stage, where before they would have been deactivated or degraded by the cooking stage.

The composite composition, when dispensed into containers 76 cools to ambient temperature (∼20°C) and forms a solid hard crystalline, glass like feed block.

The invention is not restricted to the details of the foregoing embodiment, for example:

Instead of palm oil, other oils or substances can be used, such as maize oil or any other vegetable oil.

Instead of molasses, any other carbohydrate-containing substance may be used, such as sugar or syrup or mixtures thereof.

The process parameters can be adjusted to suit particular applications. Variable process parameters include the composition of the composition (i.e. the make-up of the premix and the amount of and type of additives), the processing temperatures, the processing times and the vacuum levels.

## Claims

1. A method of manufacturing an animal feed supplement comprising feeding a carbohydrate-containing fluid composition into a first vessel (30), heating the composition and cooling the composition and allowing the composition to harden, **characterised by** heating the composition to a temperature to cause sugar cracking to take place therein and simultaneously at least partially evacuating the vessel (30).

2. A method of manufacturing an animal feed supplement as claimed in claim 1, wherein the fluid composition comprises molasses.

3. A method as claimed in claim 1 or claim 2, wherein the fluid composition is heated to 90 - 125°C for 30-150 minutes whilst maintaining a pressure in the vessel that is lower than atmospheric pressure.

4. A method as claimed in any preceding claim, wherein the pressure in the first vessel (30) is between 1000mbar and 100mbar on a vacuum pressure gauge.

5. A method as claimed in any preceding claim, wherein the method involves any one or more of the group comprising: vaporising at least a portion of the water content of the molasses; the step of removing at least some of the water vapour from the vessel (30); and the step of condensing at least some of the water vapour.

6. A method as claimed in any preceding claim, wherein heating of the composition comprises at least partial dehydration of the composition.

7. A method as claimed in any preceding claim wherein cooling the composition comprises any one or more of the group comprising: dispensing the composition into a second vessel (48), the second vessel (48) being held at a lower temperature than the first vessel (30); at least partial dehydration of the composition; and vaporising at least a portion of the water content of the composition in the second vessel.

8. A method as claimed in any preceding claim, further comprising the step of increasing the vacuum applied to the first vessel (30) and/or the second vessel (48).

9. A method as claimed in claim 7, wherein vaporising at least a portion of the water content of the composition in the second vessel comprises any one or more of the steps from the group comprising: removing at least some of the vapour from the second vessel (48); condensing at least some of the water vapour removed from the second vessel (48); after heating the composition, dispensing the composition into a dump tank (62); agitating the composition; blending an additive into the composition; and after cooling the composition, dispensing the composition into a container (76).

10. A method as claimed in claim 9, wherein the additive is one or more from the groups comprising vitamins, minerals, proteins, flavourings, colourants and preservatives.

11. An apparatus for manufacturing an animal feed supplement comprising a first vessel (30) and means (32) for feeding a carbohydrate-containing fluid composition into the first vessel (30), means (34) for heating and cooling the fluid composition **characterised by** means for heating (34) being adapted to heat the composition to above a temperature where sugar cracking takes place therein, means (46) for applying a vacuum to the composition in the first vessel (30), and wherein the first vessel (30) comprises a barometric seal (31,33, 35, 37) that prevents the pressure within the vessel (30) exceeding a predetermined threshold, the baromatic seal (31, 33, 35, 37) comprising an outlet conduit (33), through which the composition can be discharged when the pressure within the vessel (30) exceeds the predetermined threshold.

12. An apparatus as claimed in claim 11, for manufacturing a molasses-based animal feed supplement wherein the fluid composition comprises molasses.

13. An apparatus as claimed in claim 11 or claim 12, wherein the means for heating (34) is adapted to heat the fluid composition to between 90°C and 125°C for 30 - 150 minutes whilst the means for applying a vaccum is adapted to maintain the pressure in the first vessel at a pressure that is lower than atmospheric pressure.

14. An apparatus as claimed in any of claims 11 to 13, wherein the vacuum is between 1000mbar and 1 00mbar on a vacuum pressure gauge.

15. An apparatus as claimed in any of claims 11 to 14, wherein the means for applying a vacuum (46) comprises any one or more of the group comprising: a vacuum pump; a liquid ring vacuum pump; an exhaust and a filter means on the exhaust, and a condenser (42).

16. An apparatus as claimed in any one of claims 11 to 15, further comprising any one or more of the group comprising: an agitator (36) for agitating the composition; an impeller (38) for agitating the composition; a blender (16) for blending an additive into the composition; and a blender comprising a screw (72).

17. An apparatus as claimed in any one of claims 11 to 16, further comprising a computer for controlling the operation of any one or more of the group comprising; a means for feeding (32); a means for heating (34); a means for applying a vacuum (46); a condenser (42); an agitator (36) and a valve.

18. An apparatus as claimed in any one of claims 11 to 17 further comprising a dispenser (78, 80) for dispensing the animal feed supplement into a container (76).

## Patentansprüche

1. Verfahren des Herstellens eines Tierfutterergänzungsmittels, umfassend das Zuführen einer Kohlenhydrat enthaltenden Fluidzusammensetzung in ein erstes Gefäß (30), Erwärmen der Zusammensetzung und Abkühlen der Zusammensetzung und Zulassen, dass die Zusammensetzung erhärtet, **gekennzeichnet durch** das Erwärmen der Zusammensetzung auf eine Temperatur, um das Stattfinden des Crackens von Zucker darin zu verursachen und gleichzeitiges mindestens teilweises Evakuieren des Gefäßes (30).

2. Verfahren des Herstellens eines Tierfutterergänzungsmittels nach Anspruch 1, wobei die Fluidzusammensetzung Melasse umfasst.

3. Verfahren nach Anspruch 1 oder Anspruch 2, wobei die Fluidzusammensetzung 30-150 Minuten lang auf 90 - 125 °C erwärmt wird, während ein Druck im Gefäß aufrecht erhalten wird, der niedriger ist als Atmosphärendruck.

4. Verfahren nach einem der vorangehenden Ansprüche, wobei der Druck im ersten Gefäß (30) zwischen 1000 mbar und 100 mbar auf einem Unterdruckmesser beträgt.

5. Verfahren nach einem der vorangehenden Ansprüche, wobei am Verfahren einer oder mehrere der Folgendes umfassenden Gruppe beteiligt sind: Verdampfen mindestens eines Anteils des Wassergehalts der Melasse; den Schritt des Entfernens mindestens eines Teils des Wasserdampfs aus dem Gefäß (30) und den Schritt des Kondensierens mindestens eines Teils des Wasserdampfs.

6. Verfahren nach einem der vorangehenden Ansprüche, wobei das Erwärmen der Zusammensetzung das mindestens teilweise Entwässern der Zusammensetzung umfasst.

7. Verfahren nach einem der vorangehenden Ansprüche, wobei das Abkühlen der Zusammensetzung eines oder mehrere der Folgendes umfassenden Gruppe umfasst: Ausgeben der Zusammensetzung in ein zweites Gefäß (48), wobei das zweite Gefäß (48) auf einer niedrigeren Temperatur gehalten wird als das erste Gefäß (30); mindestens teilweises Entwässern der Zusammensetzung; und Verdampfen mindestens eines Anteils des Wassergehalts der Zusammensetzung im zweiten Gefäß.

8. Verfahren nach einem der vorangehenden Ansprüche, weiter umfassend den Schritt des Erhöhens des an das erste Gefäß (30) und/oder das zweite Gefäß (48) angelegten Unterdrucks.

9. Verfahren nach Anspruch 7, wobei das Verdampfen mindestens eines Anteils des Wassergehalts der Zusammensetzung im zweiten Gefäß einen oder mehrere der Schritte aus der Folgendes umfassenden Gruppe umfasst: Entfernen mindestens eines Teils des Dampfs aus dem zweiten Gefäß (48); Kondensieren mindestens eines Teils des aus dem zweiten Gefäß (48) entfernten Wasserdampfs; Ausgeben der Zusammensetzung in einen Auffangtank (62) nach dem Erwärmen der Zusammensetzung; Rühren der Zusammensetzung; Zumischen eines Additivs in die Zusammensetzung; und Ausgeben der Zusammensetzung in einen Behälter (76) nach dem Abkühlen der Zusammensetzung.

10. Verfahren nach Anspruch 9, wobei es sich bei dem Additiv um eines oder mehrere aus den Gruppen handelt, die Vitamine, Mineralstoffe, Proteine, Geschmacksstoffe, Farbstoffe und Konservierungsstoffe umfassen.

11. Vorrichtung zum Herstellen eines Tierfutterergänzungsmittels, umfassend ein erstes Gefäß (30) und ein Mittel (32) zum Zuführen einer Kohlenhydrat enthaltenden Fluidzusammensetzung in das erste Gefäß (30), ein Mittel (34) zum Erwärmen und zum Abkühlen der Fluidzusammensetzung, **dadurch gekennzeichnet, dass** das Mittel zum Erwärmen (34) dazu angepasst ist, die Zusammensetzung auf über eine Temperatur zu erwärmen, bei der das Cracken von Zucker darin stattfindet, ein Mittel (46) zum Anlegen eines Unterdrucks an die Zusammensetzung im ersten Gefäß (30), und wobei das erste Gefäß (30) einen barometrischen Verschluss (31,33, 35, 37) umfasst, der verhindert, dass der Druck im Gefäß (30) einen vorherbestimmten Schwellenwert übersteigt, wobei der barometrische Verschluss (31, 33, 35, 37) eine Auslassleitung (33) umfasst, durch die die Zusammensetzung abgeführt werden kann, wenn der Druck im Gefäß (30) den vorherbestimmten Schwellenwert übersteigt.

12. Vorrichtung nach Anspruch 11 zum Herstellen eines Tierfutterergänzungsmittels auf Melassebasis, wobei die Fluidzusammensetzung Melasse umfasst.

13. Vorrichtung nach Anspruch 11 oder Anspruch 12, wobei das Mittel zum Erwärmen (34) dazu angepasst ist, die Fluidzusammensetzung 30-150 Minuten lang auf zwischen 90° C und 125 °C zu erwärmen, während das Mittel zum Anlegen eines Unterdrucks dazu angepasst ist, den Druck im ersten Gefäß auf einem Druck zu halten, der niedriger ist als Atmosphärendruck.

14. Vorrichtung nach einem der Ansprüche 11 bis 13, wobei der Unterdruck zwischen 1000 mbar und 100 mbar auf einem Unterdruckmesser beträgt.

15. Vorrichtung nach einem der Ansprüche 11 bis 14, wobei das Mittel zum Anlegen eines Unterdrucks (46) eines oder mehrere der Folgendes umfassenden Gruppe umfasst: eine Vakuumpumpe, eine Flüssigkeitsring-Vakuumpumpe; eine Abführung und ein Filtermittel an der Abführung, und einen Kondensator (42).

16. Vorrichtung nach einem der Ansprüche 11 bis 15, weiter umfassend eines oder mehrere der Folgendes umfassenden Gruppe umfasst: ein Rührwerk (36) zum Rühren der Zusammensetzung; ein Laufrad (38) zum Rühren der Zusammensetzung; einen Mischer (16) zum Zumischen eines Additivs in die Zusammensetzung; und einen Mischer, der eine Schraube (72) umfasst.

17. Vorrichtung nach einem der Ansprüche 11 bis 16, weiter umfassend einen Computer zum Steuern des Betriebs von einem oder mehreren der Folgendes umfassenden Gruppe: ein Mittel zum Zuführen (32); ein Mittel zum Erwärmen (34); ein Mittel zum Anlegen eines Unterdrucks (46); einen Kondensator (42); ein Rührwerk (36) und ein Ventil.

18. Vorrichtung nach einem der Ansprüche 11 bis 17, weiter umfassend eine Ausgabevorrichtung (78, 80) zum Ausgeben des Tierfutterergänzungsmittels in einen Behälter (76).

## Revendications

1. Procédé de fabrication d'un complément alimentaire pour animaux, comprenant les étapes suivantes : alimenter un composé fluide comprenant des glucides dans une première cuve (30), chauffer le composé et refroidir le composé et laisser le composé durcir, **caractérisé par le fait qu'**on chauffe le composé jusqu'à une température qui cause le craquage du sucre à l'intérieur, et en même temps qu'on évacue au moins partiellement la cuve (30).

2. Procédé de fabrication d'un complément alimentaire pour animaux conforme à la revendication 1, où le composé fluide comprend de la mélasse.

3. Procédé conforme à la revendication 1 ou la revendication 2, où le composé fluide est chauffé jusqu'à 90°C à 125°C de 30 à 150 minutes pendant qu'on maintient dans la cuve une pression inférieure à la pression atmosphérique.

4. Procédé conforme à une quelconque des revendications précédentes, où la pression dans la première cuve (30) est entre 1000 mbar et 100 mbar sur un manomètre à vide.

5. Procédé conforme à une quelconque des revendications précédentes, où le procédé fait intervenir une étape quelconque ou plus du groupe comprenant : vaporiser au moins une partie du contenu en eau de la mélasse ; retirer au moins une partie de la vapeur d'eau de la cuve (30) ; et condenser au moins une partie de la vapeur d'eau.

6. Procédé conforme à une quelconque des revendications précédentes, où l'étape de chauffer le composé fait intervenir la déshydratation au moins partielle du composé.

7. Procédé conforme à une quelconque des revendications précédentes, où l'étape de refroidir le composé fait intervenir une étape quelconque ou plus du groupe comprenant : distribuer le composé dans une deuxième cuve (48), la deuxième cuve (48) étant maintenue à une température inférieure à celle de la première cuve (30) ; déshydrater au moins partiellement le composé ; et vaporiser au moins une partie du contenu en eau du composé dans la deuxième cuve.

8. Procédé conforme à une quelconque des revendications précédentes, comprenant en outre l'étape consistant à augmenter le vide fait dans la première cuve (30) et/ou la deuxième cuve (48).

9. Procédé conforme à la revendication 7, où l'étape de vaporiser au moins une partie du contenu en eau du composé dans la deuxième cuve fait intervenir une étape quelconque ou plus du groupe comprenant : retirer au moins une partie de la vapeur de la deuxième cuve (48) ; condenser au moins une partie de la vapeur d'eau retirée de la deuxième cuve (48) ; après avoir chauffé le composé, distribuer le composé dans un réservoir de décharge (62) ; agiter le composé ; mélanger un additif au composé ; et après avoir refroidi le composé, distribuer le composé dans un conteneur (76).

10. Procédé conforme à la revendication 9, où l'additif est un ou plusieurs éléments des groupes comportant des vitamines, des minéraux, des protéines, des arômes, des colorants et des conservateurs.

11. Appareil pour fabriquer un supplément alimentaire pour animaux comprenant une première cuve (30) et un moyen (32) d'alimenter un composé fluide contenant des glucides dans la première cuve (30), un moyen (34) de chauffer et de refroidir le composé fluide **caractérisé par le fait que** le moyen de chauffer (34) est apte à chauffer le composé jusqu'au-dessus d'une température où le craquage du sucre se produit à l'intérieur, un moyen (46) d'appliquer un vide sur le composé dans la première cuve (30), et où la première cuve (30) comprend un joint d'étanchéité barométrique (31, 33, 35, 37) qui empêche la pression à l'intérieur de la cuve (30) de dépasser un seuil prédéterminé, le joint d'étanchéité barométrique (31, 33, 35, 37) comprenant une conduite de sortie (33), par laquelle le composé peut se déverser quand la pression à l'intérieur de la cuve (30) dépasse le seuil prédéterminé.

12. Appareil conforme à la revendication 11, pour fabriquer un complément alimentaire pour animaux à base de mélasse, où le composé fluide comprend de la mélasse.

13. Appareil conforme à la revendication 11 ou la revendication 12, où le moyen de chauffer (34) est apte à chauffer le composé fluide jusqu'à entre 90°C et 125°C pendant 30 à 150 minutes tandis que le moyen d'appliquer un vide est apte à maintenir la pression dans la première cuve à une pression inférieure à la pression atmosphérique.

14. Appareil conforme à une quelconque des revendications 11 à 13, où le vide est compris entre 1000 mbar et 100 mbar sur un manomètre à vide.

15. Appareil conforme à une quelconque des revendications 11 à 14, où le moyen d'appliquer un vide (46) comprend un quelconque ou plusieurs éléments du groupe comprenant : une pompe à vide ; une pompe à vide à anneau liquide ; un échappement et un moyen de filtrage sur l'échappement, et un condenseur (42).

16. Appareil conforme à une quelconque des revendications 11 à 15, comprenant de plus un quelconque ou plusieurs éléments du groupe comprenant : un agitateur (36) pour agiter le composé ; un rotor (38) pour agiter le composé ; un mélangeur (16) pour mélanger un additif dans le composé ; et un mélangeur à vis (72).

17. Appareil conforme à une quelconque des revendications 11 à 16, comprenant en outre un ordinateur pour contrôler le fonctionnement d'un ou plusieurs éléments du groupe comprenant : un moyen d'alimentation (32) ; un moyen de chauffage (34) ; un moyen d'application de vide (46) ; un condenseur (42) ; un agitateur (36) et une valve.

18. Appareil conforme à une quelconque des revendications 11 à 17, comprenant en outre un distributeur (78, 80) pour distribuer le complément alimentaire pour animaux dans un conteneur (76).
